# EUROPEAN PATENT APPLICATION

(11) **EP 2 884 450 A1**
(43) Date of publication of application: **17.06.2015**
(21) Application number: 13827754.6
(22) Date of filing: 08.08.2013
(51) Int. Cl.: G06Q 30/06

(54) **TRANSACTION SUPPORT SYSTEM**

(30) Priority: 08.08.2012 JP 2012176514
(71) Applicant: Keysoft Inc., Ashigarakami-gun Kanagawa 258-0002 (JP); Kagiwada, Yoshimitsu, Ashigarakami-gun Kanagawa 258-0002 (JP)
(72) Inventor: KAGIWADA, Yoshimitsu, Kanagawa 258-0002 (JP)
(74) Representative: Schmidbauer, Andreas Konrad
(86) International application number: PCT/JP2013/071574
(87) International publication number: WO 2014/024999

(57) **Abstract**

Generation rule storage part stores a correspondence between a data item of order slip data and a data item of delivery slip data. Transaction information storage part stores the order slip data and the delivery slip data as transaction information. The transaction information processing part automatically generates delivery slip data from order slip data for a transaction between the traders based on the correspondence stored in the generation rule storage part, and stores the delivery slip data in the transaction information storage part. The transaction information processing part uses trader identifiers of a seller and a buyer provided in the automatically generated delivery slip data to automatically generate transaction traceability information for each transaction or for each package of the transaction by associating the trader identifiers of the seller and the buyer with each other, and stores the generated traceability information as the transaction information.

## Description

### TECHNICAL FIELD

The invention relates to a transaction support system supporting transactions among multiple traders.

### BACKGROUND ART

The applicant of the invention has disclosed Patent Document 1. Patent Document 1 discloses a system of enabling multiple traders involved in a series of transactions to carry out the transactions while sharing transaction data. However, even if management of transaction information is computerized with a computer system, parties involved in a transaction must issue transaction slips or corresponding transaction data (e.g., such as order data and delivery data), which needs manpower.

### PRIOR ART DOCUMENT

### PATENT DOCUMENT

Patent Document 1: Japanese Patent Application Publication No.2004-196550

### SUMMARY OF THE INVENTION

### PROBLEM TO BE SOLVED BY THE INVENTION

It is an object of the invention to automate generation of transaction data in a transaction among multiple traders to reduce labor of the parties involved in the transaction.

### MEANS FOR SOLVING THE PROBLEM

For solving the foregoing problems, the invention employs the following configuration. Specifically, a transaction support system includes: a transaction information processing part configured to communicate with terminals of traders via the Internet; a generation rule storage part configured to store correspondences between data items of order slip data and data items of delivery slip data; and a transaction information storage part configured to store the order slip data and the delivery slip data as transaction information. In the transaction support system, the transaction information processing part automatically generates delivery slip data from order slip data for a transaction between the traders based on the correspondences stored in the generation rule storage part, and stores the delivery slip data in the transaction information storage part. Then, using trader identifiers of a seller and a buyer written in the automatically generated delivery slip data, the transaction information processing part automatically generates transaction traceability information for each transaction or for each package of the transaction by associating the trader identifiers of the seller and the buyer with each other, and stores the generated traceability information as the transaction information in the transaction information storage part.

### EFFECT OF THE INVENTION

According to the invention, labor of the parties involved in a transaction between traders can be reduced by automating generation of transaction data.

### BRIEF DESCRIPTION OF THE DRAWINGS

[Fig. 1] Fig. 1 is a configuration diagram illustrating an embodiment of the invention;
[Fig. 2] Fig. 2 is a structure drawing of a commodity list illustrated in Fig. 1;
[Fig. 3] Fig. 3 is a structure drawing of traceability information illustrated in Fig. 1;
[Fig. 4] Fig. 4 is a structure drawing of a trader DB; [Fig. 5] Fig. 5 is a block diagram illustrating an example scheme of the transaction; and
[Fig. 6] Fig. 6 is a detailed configuration diagram of a transaction information processing part and a transaction information DB illustrated in Fig. 1.

### MODE FOR CARRYING OUT THE INVENTION

### (Transaction mode)

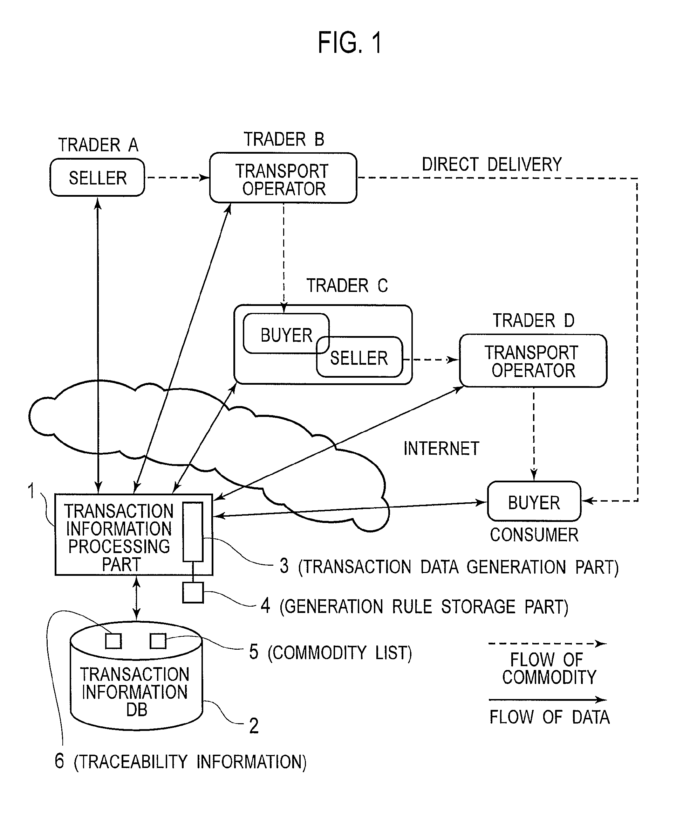

Hereinafter, an embodiment of the invention is described. Illustrated in Fig. 1 are a form of a commercial transaction between multiple traders and a consumer, and a configuration diagram of a transaction support system supporting transaction.

In Fig. 1, a consumer (or a downstream trader) as a buyer places an order to trader C as a seller for a commodity handled by trader C. If the ordered commodity is a commodity available from the stock thereof, trader C delivers ex-stock commodity to the consumer (or the downstream trader) as the buyer by using trader D as a transport operator.

When the ordered commodity is a commodity dealt with by trader A and is a commodity which should be directly delivered from trader A to a consumer (or the downstream trader), trader C, who is a seller, orders the commodity from trader A and directs trader A to directly deliver to the consumer (or the downstream trader). In accordance with the direction of trader C, trader A delivers the ordered commodity to the consumer (or the downstream trader) as the buyer by using trader B as a transport operator.

When purchasing a commodity handled by trader A, trader C orders the commodity from trader A. Trader A delivers the ordered commodity to trader C as the buyer by using trader B as the transport operator.

Here, the seller relative to the buyer is referred to as "upstream", and conversely, the buyer relative to the seller is referred to as "downstream".

Here, a transaction form illustrated in Fig. 1 is just illustrative. The transaction support system according to the embodiment is capable of supporting various transaction forms involving multiple traders, but not limited to the transaction form illustrated in Fig. 1.

### (Configuration of transaction support system)

The transaction support system according to the embodiment supports a transaction among multiple traders described above. In the embodiment, the transaction support system includes transaction information processing part 1 configured to transmit and receive data from terminals of sellers, buyers, and transport operators via the Internet, and transaction information database (transaction information DB 2) configured to store transaction information handled by the transaction information processing part 1.

Transaction information processing part 1 includes transaction data generation part 3 configured to automatically generate other transaction data based on one transaction data. Transaction data generation part 3 automatically generates, for example, delivery data based on order data. Also, for example, transaction data generation part 3 automatically generates sales data from purchase data. Reference numeral 4 represents the generation rule storage part which stores correspondences between data items of one transaction data and data items of other transaction data.

Transaction information processing part 1 communicates with terminals of the buyer, seller, and transport operator, via, for example, a system of WWW (World Wide Web) on the Internet. For this reason, transaction information processing part 1 includes a web server, and each terminal of the seller, buyer and transport operator includes a web client.

Transaction information DB 2 stores a list of commodities sold by traders (commodity list 5), and traceability information 6 in which distribution channels among traders for individual commodities are recorded. Also, transaction information processing part 1 accesses a trader database (not shown).

### (Structure of commodity list)

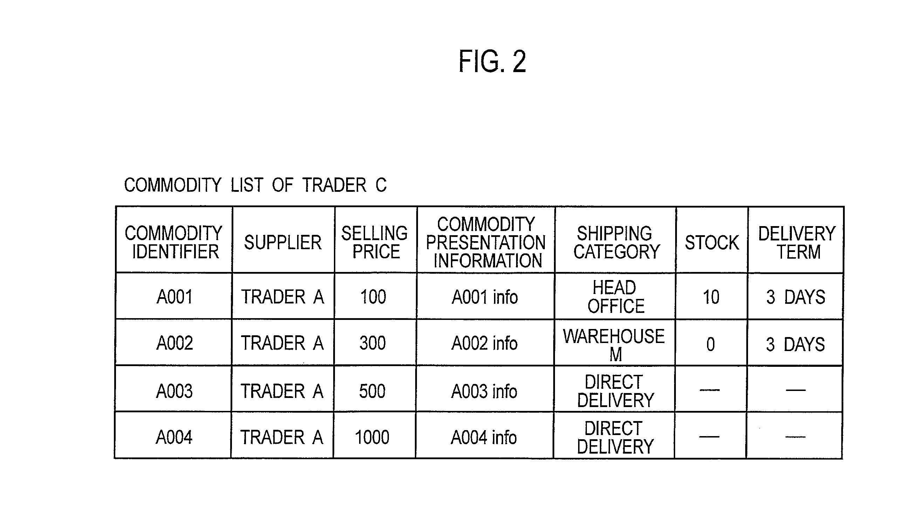

An example of commodity list 5 in the embodiment is illustrated in Fig. 2. Commodity list 5 includes commodity lists for each trader. Fig. 2 illustrates a commodity list of trader C. Commodity lists for each trader associate the commodity identifier with the supplier, selling price, commodity presentation information, shipping category, stock, and delivery term.

"Commodity identifier" is an identifier used for distinguishing a commodity from the other commodities. "Supplier" is a trader identifier of a trader from whom the commodity is purchased. "Selling price" is a price at which the company as the seller sells the commodity to the buyer. "Commodity presentation information" is a file name of the file in which information presenting the commodity is stated. The file may contain a file path. "Shipping category" specifies which site of the company the commodity is to be shipped from, or specifies that the commodity is to be directly delivered from an upstream trader to the buyer. "Stock" is the number of the commodities in stock of the company. "Delivery term" is a normal delivery term for delivery of the commodity from the company to the buyer. "Trader identifier" is an identifier used for identifying a trader from other traders.

### (Structure of traceability information)

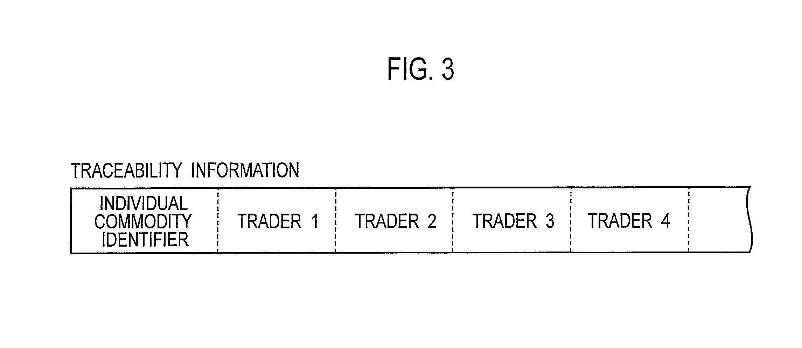

Structure of traceability information 6 in the embodiment is illustrated in Fig. 3. Traceability information 6 includes an individual commodity identifier coupled, in a time-series manner, with an identifier of each of traders who handled the commodity. "Individual commodity identifier" is data identifying an individual of the commodity from other individuals. "Identifier of trader" is a trader identifier described above having a fixed data length. Traceability information 6 is configured in such a manner that total data length extends when data of the trader identifier is added to the individual commodity identifier. For example, assume that the individual commodity identifier is "ABCD", a first trader identifier is "abc", a second trader identifier is "123", and a third trader identifier is "def". In this case, the traceability information of an individual expressed with the individual commodity identifier "ABCD" is expressed with single data of "ABCDabc123def".

### (Structure of trader database)

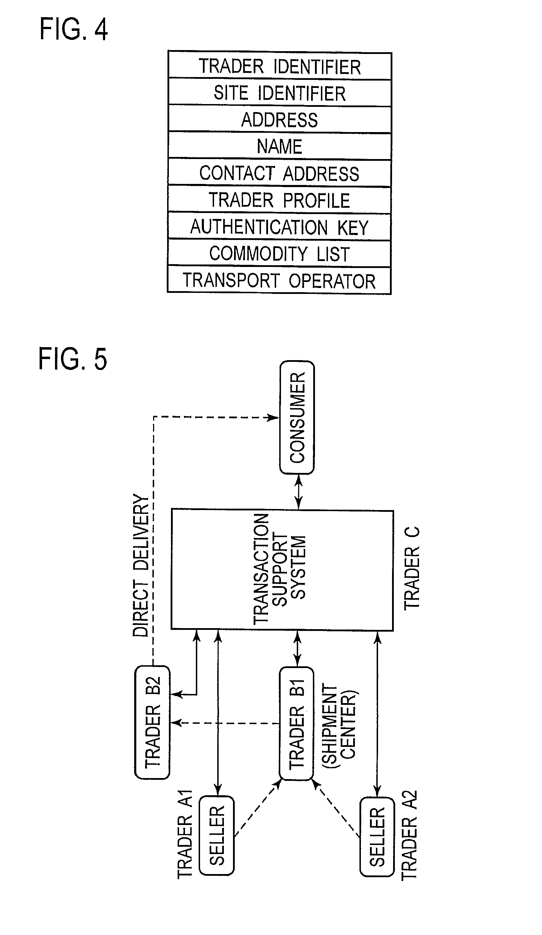

Structure of trader database (trader DB) in the embodiment is illustrated in Fig. 4. In the trader DB, for each site of each trader, trader identifier, site identifier, address, name, contact address, trader profile, authentication key, commodity list of the trader, and transport operator which the trader uses for delivery of the commodity are associated with each other. "Trader identifier" is an identifier used for identifying a trader from other traders. The trader includes a transport operator. "Site identifier" is an identifier used for identifying a trader's site from other sites. The site includes a business office such as a branch, a manufacturing site such as a factory, and a distribution site such as a warehouse. "Address" is the address of a site of the trader. "Name" is the name of a site of the trader. Name may contain department name, title, and name of responsible person. "Contact address" is contact address of a site of the trader. Contact address includes an electronic mail address. "Trader profile" is information used for introducing the trader to other traders. "Commodity list" is identified by an identifier of a commodity of the trader. "Transport operator" is identified by a trader identifier of the transport operator.

### (Automatic generation of transaction data)

In Fig. 1, transaction data generation part 3 automatically generates various transaction data necessary in the course of a transaction in accordance with generation instruction from a terminal. For example, transaction data generation part 3 automatically generates delivery data based on order data inputted by the buyer (or, input agents thereof). Also, transaction data generation part 3 automatically generates sales data based on inputted purchase data. Generally in the field of EDI (Electronic Data Interchange), order data and delivery data are known to have a relationship termed two sides of the same coin, and the values of data items of both of those data are common to each other. Similarly, purchase data and sales data are also known to have a relationship termed two sides of the same coin, and the values of data items of both of those data are common to each other. Accordingly, transaction data generation part 3 automatically generates delivery data by inserting the value of each of data items of inputted order data into a corresponding data item of delivery data. Similarly, transaction data generation part 3 automatically generates sales data by inserting the value of each of data items of inputted purchase data into a corresponding data item of sales data. Thus, transaction data generation part 3 automatically generates one transaction data based on the other transaction data having a data item of corresponding value.

A correspondence between data items of one transaction data and data items of the other transaction data is registered in generation rule storage part 4 in advance. Transaction data generation part 3 refers to the correspondences of data items registered in generation rule storage part 4 to automatically generate one transaction data from other transaction data, the one and other transaction data having a relationship termed two sides of the same coin.

According to an aspect of the invention, labor of traders involved in a transaction among multiple traders can be reduced by automating generation of transaction data.

### (Automatic generation of traceability information)

Delivery data generated by transaction data generation part 3 includes information of the seller and buyer for specific individual commodity. Accordingly, based on delivery data generated by transaction data generation part 3, transaction information processing part 1 couples the individual commodity identifier, in a time-series manner, with trader identifiers of the seller and buyer of the commodity, and thereby automatically generates and stores traceability information 6 in transaction information DB 2.

According to an aspect of the invention, labor of traders involved in a transaction among multiple traders can be reduced by automating generation of traceability information.

### (Example of transaction using the system)

In Fig. 5, the consumer acquires a commodity list of commodities handled by trader C, and orders a commodity of trader A1 (commodity provided by trader A1) and a commodity of trader A2 (commodity provided by trader A2), both contained in the commodity list, to trader C. The ordered commodities are delivered to trader B1 (shipment center) by trader A1 and trader A2, consolidated into a package at the shipment center, and then shipped by trader B2 as a transport operator directly to the consumer. In the course of the transaction, transaction support system stores, in transaction information DB 2, order data corresponding to a transaction between the consumer and trader C, order data corresponding to a transaction between trader C and trader A1, and order data corresponding to a transaction between trader C"and trader A2.

Based on the respective order data, transaction data generation part 3 generates delivery data corresponding to respective order data. Transaction information processing part 1 stores delivery data generated by transaction data generation part 3 into transaction information DB 2. Based on respective delivery data generated by transaction data generation part 3, transaction information processing part 1 generates traceability information 6 and stores in transaction information DB 2. In this transaction example, a tablet terminal, a cellular terminal, or the like may be used as a terminal of the consumer.

### (Distribution tracing and transaction tracing)

The inventor considers that there are two kinds of the traceability; distribution tracing and transaction tracing. Distribution tracing is to trace movements of the package itself, for example, from a supplier or supplier's warehouse to a transport operator, and then to a warehouse of the wholesaler. On the other hand, transaction tracing can be to trace ownership between entities or parties of transaction (seller and buyer as contractors). Transaction is made between transaction entities or transaction parties, but not at the warehouse. The tracing is made by passing through the transport operator similarly, and thereafter the transaction slip is received by headquarters of the wholesaler, but not the wholesaler's warehouse. Thus, transaction tracing is to trace transfer of ownership to the wholesaler (or at least receipt by the wholesaler).

Transaction information processing part 1 includes a function enabling both distribution tracing and transaction tracing described above.

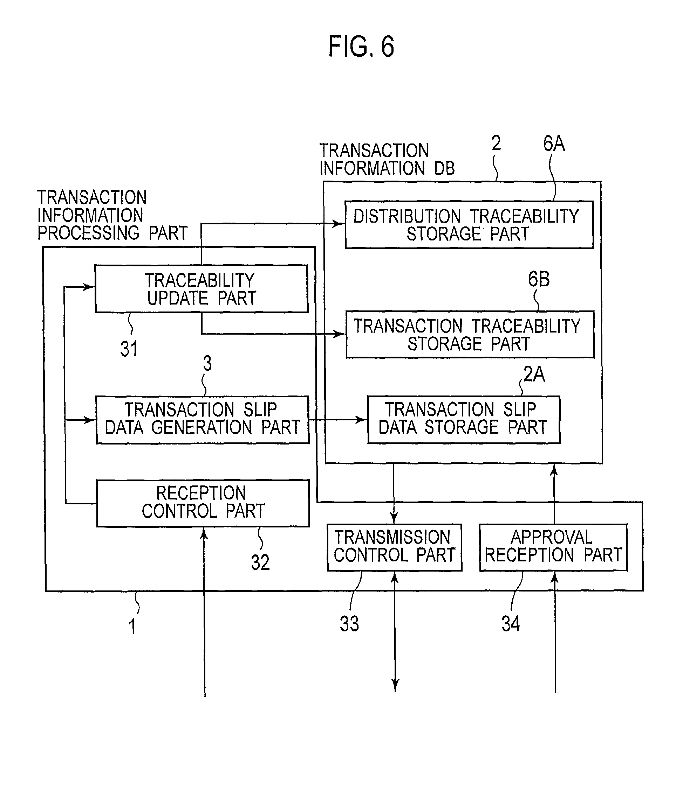

In Fig. 6, transaction information processing part 1 includes transaction slip data generation part (transaction data generation part) 3, traceability update part 31, reception control part 32, transmission control part 33, and approval reception part 34. Transaction information DB 2 includes distribution traceability storage part 6A, transaction traceability storage part 6B, and transaction slip data storage part 2A.

Distribution traceability storage part 6A stores distribution traceability information. Distribution traceability information is configured by associating, in a time-series manner, a package identification code and a transaction identification code with site code of a site where the package is delivered or shipped.

Transaction traceability storage part 6B stores transaction traceability information. Transaction traceability information is configured by associating, in a time-series manner, a package identification code and a transaction identification code with the trader identifier of a trader who has acquired the ownership of the package.

In Fig. 1, when trader C as a buyer orders a commodity to trader A as a seller, the order information is inputted to transaction information processing part 1 through a terminal of trader C. The order information includes at least a trader identifier of trader C as a buyer and a trader identifier of trader A as a seller. Transaction slip data generation part 3 generates order slip data based on order information inputted through a terminal of trader C, and stores in transaction slip data storage part 2A. At that time, transaction slip data generation part 3 puts the transaction identification code in the order slip data. Transaction identification code is an identification code for identifying one transaction from other transactions. Transmission control part 33 transmits order slip data generated by transaction slip data generation part 3 to a terminal of trader A as a seller. As a transmission method, communication by a push technique or a pull technique between a server run by transaction information processing part 1 and a client run by a terminal of trader A can be considered. As a method of identifying a client of trader A, log-in of the client to the server by using information which can identify a trader identifier or site identifier of trader A can be considered. It can be determined from a trader identifier of the seller included in the order slip data that the transmission destination of the order slip data being transmitted is trader A.

Here, assume that order slip data is received by a warehouse shipping a commodity of trader A (hereafter referred to as the shipment warehouse). Assume that at the shipment warehouse, the package identification code and the transaction identification code are recorded in a slip attached to the package to be shipped (hereafter referred to as the package slip). Package identification code is a code for identifying one package from other packages. The transaction identification code can be acquired from the order slip data.

When a package is shipped from a shipment warehouse, the package identification code and transaction identification code recorded in the package slip are transmitted from a terminal of the shipment warehouse to transaction information processing part 1 by inputting a bar code or the like indicated on the package slip into an input device. At that time, the site identifier of the shipment warehouse and the shipment flag are added to the package identification code and the transaction identification code.

Reception control part 32 receives the package identification code, transaction identification code, site identifier, and shipment flag transmitted from a terminal. The shipment flag contains date/time information. Reception control part 32 passes the received package identification code, transaction identification code, site identifier, and shipment flag to traceability update part 31 and also directs traceability update part 31 to record distribution traceability information. In response to the direction, traceability update part 31 records in distribution traceability storage part 6A by associating the package identification code and transaction identification code with the site identifier and the shipment flag.

Reception control part 32 also determines whether ownership of the package is transferred from the seller to the buyer. If transaction condition corresponding to the received transaction identification code is set in the shipment basis, reception control part 32 determines a next condition since the shipment flag has been received. That is, reception control part 32 acquires a trader identifier associated with the received site identifier from trader DB, and determines whether the trader identifier matches a trader identifier of the seller mentioned in order slip data corresponding to the transaction identification code. If the trader identifiers match each other, reception control part 32 determines that ownership of the package has been transferred from the seller to the buyer according to the shipment basis. In this case, reception control part 32 passes the received transaction identification code to transaction slip data generation part 3 and also directs transaction slip data generation part 3 to generate delivery slip data and bill slip data. In this case, reception control part 32 passes the received package identification code and transaction identification code to traceability update part 31 and also directs traceability update part 31 to record transaction traceability information.

In response to the direction of reception control part 32, transaction slip data generation part 3 reads order slip data corresponding to the transaction identification code from transaction slip data storage part 2A, and automatically generates delivery slip data and bill slip data corresponding to the read order slip data into transaction slip data storage part 2A. Delivery slip data and bill slip data contain the trader identifier of the buyer and the trader identifier of the seller.

In response of the direction of reception control part 32, traceability update part 31 updates transaction traceability information. For this purpose, traceability update part 31 acquires delivery slip data corresponding to the transaction identification code passed by reception control part 32 from transaction slip data storage part 2A or transaction slip data generation part 3. Then, traceability update part 31 associates the trader identifier of the seller and the trader identifier of the buyer contained in the delivery slip data with the package identification code and the transaction identification code passed by the reception control part 32, and stores in transaction traceability storage part 6B. At that time, traceability update part 31 records the trader identifiers in transaction traceability storage part 6B in a time-series manner so as to indicate that ownership of the package has been transferred from the buyer to the seller.

Next, in Fig. 1, the package arrives at the site of trader B as a transport operator, and is shipped out from the site at the same time. When the package arrives at a site of trader B, the package identification code and transaction identification code recorded in the package slip are transmitted from a terminal of the site of trader B to transaction information processing part 1 by inputting a bar code or the like indicated on the package slip into an input device. At that time, the site identifier of the site of trader B and the arrival flag are added to the package identification code and the transaction identification code.

Reception control part 32 receives the package identification code, transaction identification code, site identifier, and arrival flag transmitted from a terminal. The arrival flag contains date/time information. Reception control part 32 passes the received package identification code, transaction identification code, site identifier, and arrival flag to traceability update part 31 and also directs traceability update part 31 to record distribution traceability information. In response to the direction, traceability update part 31 records in distribution traceability storage part 6A by associating the package identification code and transaction identification code with the site identifier and the arrival flag.

When the package is shipped from a site of trader B, the package identification code and transaction identification code recorded in the package slip are transmitted from a terminal of the site of trader B to transaction information processing part 1 by inputting a bar code or the like indicated on the package slip into an input device. At that time, the site identifier of the site of trader B and the arrival flag are added to the package identification code and the transaction identification code.

Reception control part 32 receives the package identification code, transaction identification code, site identifier, and shipment flag transmitted from a terminal. Reception control part 32 passes the received package identification code, transaction identification code, site identifier, and shipment flag to traceability update part 31 and also directs traceability update part 31 to record distribution traceability information. In response to the direction, traceability update part 31 records in distribution traceability storage part 6A by associating the package identification code and transaction identification code with the site identifier and the shipment flag.

When the package arrives at a site of trader B or is shipped therefrom, the trader identifier of trader B does not match trader identifiers of the buyer and seller mentioned on order slip data corresponding to the transaction identification code. For this reason, reception control part 32 does not detect transfer of the package's ownership, does not direct generation of delivery slip data and the like, and does not direct to record transaction traceability information.

Next, In Fig. 1, the package arrives at a warehouse (hereafter referred to as the arrival base) of trader C as a buyer. When the package arrives at the arrival base of trader B, the package identification code and transaction identification code recorded in the package slip are transmitted from a terminal of the arrival base to transaction information processing part 1 by inputting a bar code or the like indicated on the package slip into an input device. At that time, the site identifier of the arrival base and the arrival flag are added to the package identification code and the transaction identification code.

Reception control part 32 receives the package identification code, transaction identification code, site identifier, and arrival flag transmitted from a terminal. Reception control part 32 passes the received package identification code, transaction identification code, site identifier, and arrival flag to traceability update part 31 and also directs traceability update part 31 to record distribution traceability information. In response to the direction, traceability update part 31 records in distribution traceability storage part 6A by associating the package identification code and transaction identification code with the site identifier and the arrival flag.

Reception control part 32 also determines whether ownership of the package is transferred from the seller to the buyer. If transaction condition corresponding to the received transaction identification code is set in the arrival basis, reception control part 32 determines a next condition since the arrival flag has been received. That is, reception control part 32 acquires a trader identifier associated with the received site identifier from trader DB, and determines whether the trader identifier matches a trader identifier of the buyer mentioned in order slip data corresponding to the transaction identification code. If the trader identifiers match each other, reception control part 32 determines that ownership of the package has been transferred from the seller to the buyer according to the arrival basis. In this case, reception control part 32 passes the received transaction identification code to transaction slip data generation part 3 and also directs transaction slip data generation part 3 to generate delivery slip data and bill slip data. In this case, reception control part 32 passes the received package identification code and transaction identification code to traceability update part 31 and also directs traceability update part 31 to record transaction traceability information.

In response to the direction of reception control part 32, transaction slip data generation part 3 reads order slip data corresponding to the transaction identification code from transaction slip data storage part 2A, and automatically generates delivery slip data and bill slip data corresponding to the read order slip data into transaction slip data storage part 2A. Delivery slip data and bill slip data contain the trader identifier of the buyer and the trader identifier of the seller.

In response of the direction of reception control part 32, traceability update part 31 updates transaction traceability information. For this purpose, traceability update part 31 acquires delivery slip data corresponding to the transaction identification code passed by reception control part 32 from transaction slip data storage part 2A or transaction slip data generation part 3. Then, traceability update part 31 associates the trader identifier of the seller and the trader identifier of the buyer contained in the delivery slip data with the package identification code and the transaction identification code passed by the reception control part 32, and stores in transaction traceability storage part 6B. At that time, traceability update part 31 records the trader identifiers in transaction traceability storage part 6B in a time-series manner so as to indicate that ownership of the package has been transferred from the buyer to the seller.

As described above, according to this embodiment, distribution traceability information and transaction traceability information can be recorded separately. Conventionally, since distribution traceability information is inputted by a party involved, there is no evidence indicating that inputted traceability information is correct. On the other hand, according to this embodiment, traceability information is unlikely to be tampered since generation of the distribution traceability information is interlocked with generation of the transaction traceability information and generation of transaction documents. Accordingly, reliability of traceability information can be improved.

### (Access and restriction of information)

Transaction information processing part 1 accepts access to information stored in transaction information DB 2. User wishing to access information stored in transaction information DB 2 requests a server of the transaction support system through a client of a terminal for access to transaction information. The client adds a code from which the user's trader identifier or site identifier can be identified, to the transaction information reference request. Also, the client adds type of desired transaction information to the transaction information reference request. Transmission control part 33 reads, from transaction information DB 2, only transaction information whose trader identifier or site identifier identifiable from the code added to the reference request matches a trader identifier or a site identifier associated with transaction information requested to access, and transmits to the client who requested the access. Accessible transaction information includes various traceability information and various transaction slip data.

Thus, for example, trader A can access only transaction information relating to trader A, and a site of operation of trader A can access only transaction information relating to the site. Only relative information is accessible while protecting the information.

Further, for example, the head office of trader A can access all transaction information relating to trader A, a regional headquarters of trader A can access only transaction information relating to sites in a region managed by the regional head quarter, and a branch office of trader A can access only transaction information relating to the branch office. In this case, it is conceived that an organization group configured by associating the trader identifier of an organizationally low-order trader or the site identifier of an organizationally low-order site with the trader identifier of an organizationally high-order trader or the site identifier of an organizationally low-order base is registered in a storage device in advance. Transmission control part 33 enables the user requesting access to transaction information to view only transaction information associated with a low-order trader identifier or site identifier contained in an organization group in which the user is identified with a high-order trader identifier or a high-order site identifier.

With such configuration, work flow can be improved. For example, assume that there is a work flow specifying that when a branch office intends to order a commodity, the commodity must be ordered through the regional headquarters and the home office. In this flow, a considerable number of days are necessary until delivery of the ordered commodity. On the other hand, according to this embodiment, both head office and regional headquarters can instantly recognize an order placed by a branch office by viewing transaction information. This eliminates the conventional procedure through the regional headquarters and head office, and thereby reduces the lead time up to delivery of the commodity.

Approval reception part 34 receives approval of the transaction slip data from the user who viewed transaction slip data. Provided that approval reception part 34 has received approval to transaction slip data, transaction slip data generation part 3 may be configured to generate other transaction slip data based on the transaction slip data.

### (Hardware configuration)

In the above embodiment, transaction information processing part 1 and components included therein are achieved when the computer executes a program. Transaction information DB 2 and trader DB 12 are built up within a storage device. Generation rule storage part 4 is provided in a storage region of the storage device. Data handled by the computer is read from the storage device or stored in the storage device.

The invention is not limited to the scope of the embodiments described above, but may apply to a scope specified in the appended claim.

### EXPLANATION OF THE REFERENCE NUMERALS

- 1: transaction information processing part
- 2: transaction information DB
- 2A: transaction slip data storage part
- 3: transaction data generation part, transaction slip data generation part
- 4: generation rule storage part
- 5: commodity list
- 6: traceability information
- 6A: distribution traceability storage part
- 6B: transaction traceability storage part
- 31: traceability update part
- 32: reception control part
- 33: transmission control part
- 34: approval reception part

## Claims

1. A transaction support system comprising:
A transaction information processing part configured to communicate with terminals of traders via the Internet;
a generation rule storage part configured to store a correspondence between a data item of order slip data and a data item of delivery slip data; and
a transaction information storage part configured to store the order slip data and the delivery slip data as transaction information, wherein
the transaction information processing part automatically generates delivery slip data from order slip data for a transaction between the traders based on the correspondence stored in the generation rule storage part, and stores the delivery slip data in the transaction information storage part, and
the transaction information processing part uses trader identifiers of a seller and a buyer provided in the automatically generated delivery slip data to automatically generate transaction traceability information for each transaction or for each package of the transaction by associating the trader identifiers of the seller and the buyer with each other, and stores the generated traceability information as the transaction information in the transaction information storage part.

2. The transaction support system according to claim 1, wherein the transaction information processing part generates the delivery slip data based on input information from the terminals, under the condition in which a transfer of ownership of the package for the transaction from the seller to the buyer is detected.

3. The transaction support system according to claim 1, wherein the transaction information processing part records distribution traceability information based on input information from the terminals by recoding arrivals and shipments of the package for the transaction at involved sites into the transaction information storage part in a time-series manner, and thereby records the transaction traceability information and the distribution traceability information separately.

4. The transaction support system according to claim 1, wherein the transaction information processing part receives, from any of the terminals, a reference request accompanied by a code that allows a trader identifier to be identified, reads only the transaction information associated with the trader identifier identified based on the code from the transaction information storage part in response to the reference request, and transmits the read transaction information to the terminal making the reference request.
